# EUROPEAN PATENT APPLICATION

(11) **EP 2 261 721 A1**
(43) Date of publication of application: **15.12.2010**
(21) Application number: 10005708.2
(22) Date of filing: 01.06.2010
(51) Int. Cl.: G02B 27/00, F21V 5/04, H01L 33/58, G03F 7/20, G02B 27/09, F21V 13/04, G02B 3/00

(54) **Light irradiation device**

(30) Priority: 12.06.2009 JP 2009140913
(71) Applicant: USHIO DENKI KABUSHIKI KAISHA, Tokyo 100 (JP)
(72) Inventor: Kabuki, Kiyoyuki, Himeji-shi Hyogo-ken (JP); Yano, Kazuaki, Himeji-shi Hyogo-ken (JP); Ishida, Kenji, Himeji-shi Hyogo-ken (JP); Hata, Hiroshige, Himeji-shi Hyogo-ken (JP); Kataoka, Ken, Himeji-shi Hyogo-ken (JP)
(74) Representative: Tomerius, Isabel

(57) **Abstract**

In order to avoid irregular irradiation of a substrate, a light irradiation device is provided, comprised of a plurality of adjacently arranged segment light sources wherein a plurality of LEDs is arranged on a substrate, wherein said segment light source comprises an integrator lens arranged such as to be irradiated with light of said plurality of LEDs and a condenser lens arranged such as to be irradiated with light transmitted by said integrator lens, said integrator lens consisting of a plurality of cell lenses, whose aperture sizes at that side of said integrator lens that opposes said LEDs have different dimensions. Alternatively or additionally, a mask is provided at that side of said integrator lens which opposes said LEDs, said mask having apertures at positions corresponding to a respective one of said cell lenses, the mask apertures having sizes of different dimensions.

## Description

### Background of the Invention

### Field of Invention

The present invention relates to a light irradiation device, and relates specifically to a light irradiation device forming a linear or planar light source being provided with a plurality of LEDs.

### Description of Related Art

For light irradiation devices being provided with LEDs, for example in JP-A-2006-235617 a UV irradiation device is described in which a plurality of LEDs is arranged side by side on a substrate. In this device, LED elements are arranged all over a large-area substrate corresponding to the maximum size of a liquid crystal panel substrate, and only the necessary LEDs are lighted and perform the irradiation for the intended curing of a sealant.
Further, in JP-A-2002-303988, an exposure device is described wherein light emitting diodes are arranged on the same substrate such as mentioned above and light is irradiated towards a workpiece such as a substrate directly below the device.

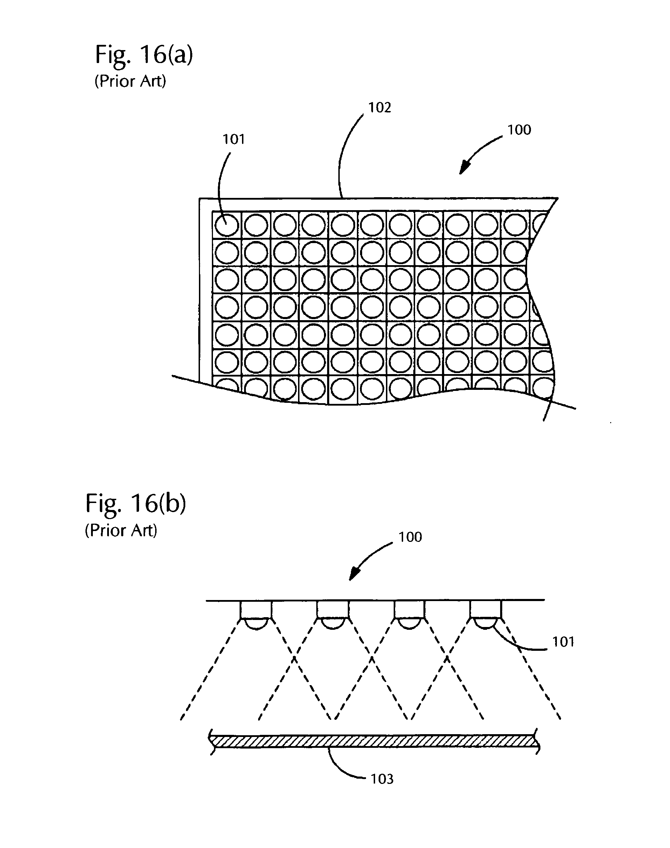

FIG. 16 is a schematic view of a light irradiation device made up by arranging LEDs side by side on a substrate. FIG. 16(a) is an explanatory view of the light source part seen from the front, and FIG. 16(b) is an explanatory view seen from the lateral direction.
In this light irradiation device, a light source 100 is constituted of a plurality of light emitting diodes (in the following referred to as LEDs) 101. These LEDs 101 are arranged all over on a light source stage 102. In the same device, for each LED 101 a power supply device (not shown) switching ON and OFF is provided, the lighting region is selected and determined according to the shape of a workpiece 103, and power is supplied from the power supply device to the LEDs 101.
In the technique described in the JP-A-2006-235617, the workpiece 103 is, for example, a liquid crystal panel substrate. In this case, a sealant is provided rectangularly along a defined picture element frame between two substrates, and liquid crystals are filled into the interior of these picture element frames. To perform the curing of the sealant sandwiched between the substrates, only the LEDs corresponding to a rectangular lighting region are supplied with power and are lighted.

But with the above-mentioned light irradiation device in which LEDs 101 are arranged side by side on a substrate, sometimes a uniform light irradiation cannot be effected because of fluctuations in the radiation among the individual LEDs 101 or fluctuations in the deterioration characteristics among the LEDs 101. Because of these conditions, with devices in which a plurality of LEDs 101 is arranged side by side on a plane such as in the device shown in FIG. 16, for example fluctuations in the light quantity or, although small, in the spectrum (wavelength) of the radiated light occur for each LED 101. Therefore, it may be difficult to obtain a uniform irradiation or spectrum in the irradiation region, and there are cases in which the desired light irradiation cannot be performed. Further, with these devices there is also the problem that in case that a certain LED 101 has become non-lighting, it is difficult to complete the intended irradiation only with the remaining LEDs 101.
Concretely, if one LED 101 has become non-lighting and the power input to the surrounding LEDs 101 is increased, the influence of this input extends to the LED region without irregularities, and even if the set irradiance is achieved at the region of the LED having become non-lighting, a high irradiance distribution occurs in the adjacent regions and as a result, the uniformness of the entire irradiation is impaired.

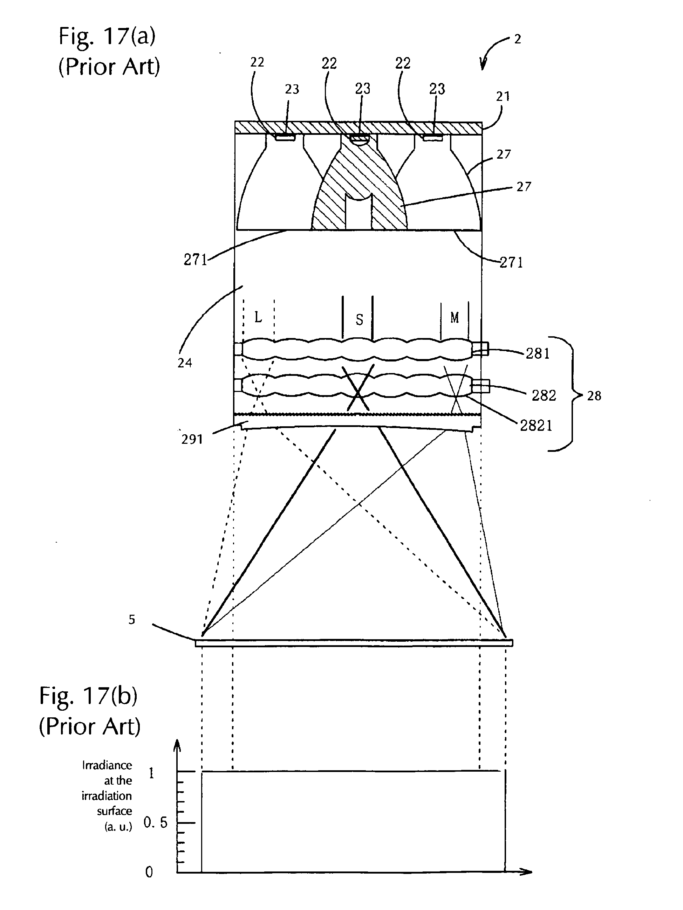

To solve this problem, a segment light source using an integrator lens such as shown in FIG. 17(a) is conceived.
In FIG. 17(a), a plurality of LEDs 23 is provided on a substrate 21, and each LED 23 is sealed by a transparent resin 22 and a transparent lens 27. The light emitted from each LED 23 is rendered an approximately parallel light towards the bottom side of the paper sheet by the transparent lens 27, and this parallel light enters into two integrator lenses 28 (281, 282) and is emitted from the emission surface 2821. At the integrator lenses 28, approximately spherical cell lenses are provided, and the parallel light having entered each cell lens is emitted from the emission surface 2821 of the integrator lenses and is condensed by a condenser lens 291 and is piled up on the irradiation surface of a workpiece 5. In doing so, an irradiation distribution such as shown in FIG 17(b) is formed on the irradiation surface and a uniform irradiance distribution can be obtained in the region below the segment light source.

Even if one LED among the plurality of LEDs 23 has become non-lighting, the uniformness of the irradiance at the irradiation surface is maintained and a specified irradiance can be provided by increasing the output of the LEDs being able to light which are provided in the segment light source 2.
With the light irradiation device of JP-A-2006-235617, by means of providing a power supply device switching ON and OFF for each LED it is possible to select and determine a lighting region according to the shape of the workpiece. Therefore, it is conceivable that it is possible to constitute a light irradiation device by arranging a plurality of segment light sources of FIG. 17 adjacent to each other and to light or not light the segment light sources according to the shape of the workpiece.

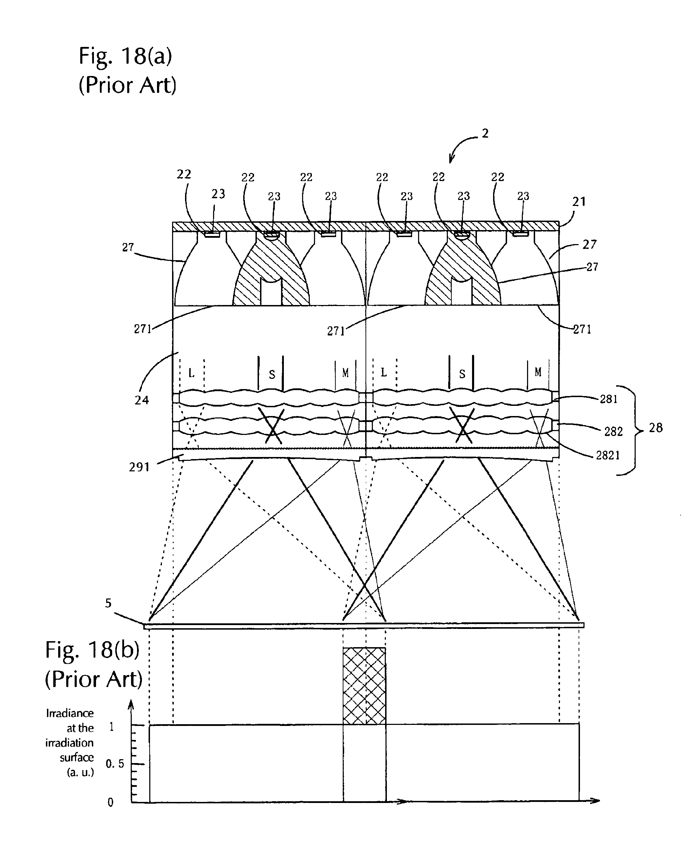

In JP-A-2006-235617, it is possible to select and determine an irradiation region according to the shape of a workpiece by providing a power supply device switching ON and OFF for each LED. Similarly, it is conceivable that also with the above mentioned segment light source of FIG. 17, a light irradiation device can be made up by arranging a plurality of these segment light sources adjacent to each other and to light or not light the segment light sources according to the shape of the workpiece. But it has been found out that the following problems occur when segment light sources shown in FIG. 17 are arranged adjacent to each other. That is, if segment light sources are arranged adjacent to each other, the radiation from each segment light source overlaps at its boundaries at the irradiation surface, as is shown in FIG. 18. When this occurs, the light quantities are added up at the region of the overlapping radiations as shown in FIG. 18(b) and an irradiance distribution peak only in this region occurs. So, even if the uniformness of the irradiance is ensured by the segment light source of FIG. 17, there is the problem that the uniformness of the irradiance is impaired among segment light sources if a light irradiation device is made up.

### Summary of the Invention

The present invention was made to solve the above mentioned problems and has the object to suppress peaks of the added-up light quantities among segment light sources and to make it possible to render the distribution of the irradiance at the surface to be irradiated uniform.

To solve the above mentioned problems, a light irradiation device is provided as claimed in claim 1. Preferred embodiments are described in the dependent claims. In detail, in the present invention the aperture sizes of each cell lenses at that side of the integrator lens provided in each segment light source which opposes the LEDs, or the aperture sizes provided at positions corresponding to each cell lens of a mask arranged at that side of each cell lens which opposes said LEDs are made up of various kinds of sizes differing in dimensions and the irradiance distribution at the surface to be irradiated by each segment light source is rendered such that the irradiance becomes highest at the central positions and the irradiance decreases gradually from the center towards the outer edges. When such segment light sources are arranged adjacent to each other, the regions in which two segment light sources overlap become such that regions with a low irradiance overlap and peaks of added-up light quantities between segment light sources can be suppressed.

By means of the above mentioned constitution, a peak of added-up light quantities can be suppressed in a region where two segment light sources overlap, but in a region where three or more segment light sources overlap, a region where light from these three or more segment light sources overlaps is formed and the added-up light quantities are great and the uniformness of the irradiance distribution may deteriorate. Thus, corner radii or corner cuts are provided at the corner parts of each cell lens or at the corner parts of the apertures of the mask provided at that side of each cell lens that opposes the LEDs. By means of this configuration, peaks of added-up light quantities in regions in which the light of three or more segment light sources overlaps can be suppressed.

Here, the shapes (shape at the light entrance face) of all cell lenses of that side of said integrator lens which opposes the LEDs are similar, and the aperture size of each cell lens is the size (surface area or dimension of length and width etc.) of the part acting as the lens (the part becoming a spherical face) of each cell lens. If a mask is provided at that side of each cell lens which opposes the LEDs, the apertures of this mask are also similar, and, such as mentioned above, also the aperture size of this mask is the size (surface area or dimension of length and width etc.) of each aperture of the mask. If a mask is provided, the aperture sizes of all cell lenses of the integrator lens may be the same.

That is, with the present invention the above mentioned problems are solved as follows:
(1) In a light irradiation device consisting of a plurality of adjacently arranged segment light sources wherein a plurality of LEDs is arranged on a substrate, an integrator lens irradiated with the light of said plurality of LEDs and a condenser lens irradiated with the emission light from said integrator lens are provided in each said segment light source. This integrator lens consists of a plurality of cell lenses, and the aperture sizes of these cell lenses at that side of the integrator lens that opposes said LEDs are made up of various kinds of sizes differing in dimensions.
(2) In a light irradiation device consisting of a plurality of adjacently arranged segment light sources wherein a plurality of LEDs is arranged on a substrate, an integrator lens irradiated with the light of said plurality of LEDs and a condenser lens irradiated with the emission light from said integrator lens are provided in each said segment light source. This integrator lens consists of a plurality of cell lenses, and a mask in which apertures are provided at positions corresponding to each cell lens is arranged at that side of said integrator lens which opposes said LEDs. The aperture sizes of this mask are made up of various kinds of sizes differing in dimensions.
(3) In said points (1) or (2), corner radii and/or corner cuts are provided at the corner parts of the cell lenses at the side which opposes the LEDs or at the corner parts of the apertures of the mask arranged at the side which opposes said LEDs.

Thus it is preferred to arrange all apertures of all cell lenses or of the mask in the irradiation area of each LED of said segment light sources such that at least one cell lens aperture of each size or mask aperture of each size is contained.

By means of a configuration as mentioned above, the light from each LED is made incident into the cell lenses (apertures of the mask) of each size, and the entrance surface areas of the emission light from each LED to the cell lenses (apertures of the mask) of each size are configured such that there are no large differences. Even if one LED should go out, the irradiance distribution at the surface to be irradiated by each segment light source can be maintained such that it is the same as before by increasing the intensity of the emission light of the other LEDs. That is, it is possible to maintain the irradiance distribution at the surface to be irradiated by each segment light source the same before and after the going-out by making up the integrator lens such that in the integrator lens, which is constituted of cell lenses with various sizes, the individual cell lenses of each size are arranged according to a certain rule, this group is made 'one set' and the cell lenses of this one set are arranged regularly, as will be mentioned below, and by providing for an approximately uniform radiation of light from each LED into the cell lenses of each set.

For example, by configuring the entrance surface S1 for light emitted from a certain LED into cell lenses with an aperture size of L1 and the entrance surface S2 for light emitted from another LED into cell lenses with the aperture size of L1 such that there are no large differences, and similarly configuring the entrance surface S3 for light emitted from a certain LED into cell lenses with an aperture size of L2 and the entrance surface S3 for light emitted from another LED into cell lenses with the aperture size of L2 such that there are no large differences, and further providing the same configuration also for cell lenses with aperture sizes of L3, L4 ..., it is possible to maintain the irradiance distribution at the surface to be irradiated by each segment light source approximately the same before and after the going-out, as was mentioned above. This means that when the ratio of the entrance surfaces for the emission light from each LED into the cell lenses with the said aperture sizes of L1, L2, L3, ... is considered, this ratio is rendered such that it becomes approximately the same ratio for each LED.

By means of the present invention, the following results can be obtained.
(1) Because the aperture sizes of all segment lenses on that side of the integration lens provided in each segment light source which opposes the LEDs, or the aperture sizes provided at positions corresponding to each segment lens of a mask arranged at that side of each segment lens which opposes said LEDs, are made up from various kinds of sizes differing in dimensions, peaks of the added-up light quantity between segment light sources can be suppressed and it can be aimed at rendering the irradiance distribution uniformly.
(2) Because all cell lenses are arranged such that at least one cell lens of each size of the differing aperture sizes is contained within the irradiation area of each LED of the segment light source, or the apertures of the mask arranged at that side which opposes the LEDs are arranged such that at least one aperture of each of the differing sizes is contained within the irradiation area of each LED of the segment light source, and the entrance surface areas for the emission light from each LED into the cell lenses or apertures with each size are configured such that there are no large differences, even if one LED should go out the irradiance distribution at the surface to be irradiated by each segment light source can be maintained such that it is the same as before by increasing the intensity of the emission light of the other LEDs.
(3) Because corner radii and/or corner cuts are provided at the corner parts of the segment lenses at the side which opposes the LEDs or at the corner parts of the apertures of the mask arranged at that side which opposes said LEDs, peaks of added-up light quantities of regions in which the light from three or more segment light sources overlaps can be suppressed.

### Brief Description of the Drawings

FIG. 1 is a schematic perspective view of a light irradiation device and a light source unit of an embodiment of the present invention.

FIG. 2 is a schematic view showing the configuration of a segment light source and the irradiance distribution at the light irradiation surface of the embodiment of the present invention.

FIG. 3 is a schematic view showing the configuration in case that segment light sources are arranged adjacent to each other and the irradiance distribution at the light irradiation surface.

FIGs. 4(a) and 4(b) are schematic views showing a structural example of an integrator lens arranged at the LED side.

FIG. 5(a) is a schematic view showing a structural example of the light exit side face of an integrator lens arranged at the LED side and FIG. 5(b) shows an example for the configuration of a mirror provided at the LED instead of the transparent lens.

FIGs. 6(a) and 6(b) are schematic views showing the configuration of a segment light source for the case of forming the integrator lens by means of one element.

FIG. 7 is a schematic view showing another structural example of the integrator lens.

FIG. 8 is a schematic view showing a structural example for the case of arranging a mask at the light entrance side of the integrator lens instead of making up the cell lenses of the integrator lens from various kinds of sizes.

FIG. 9 is a schematic view showing the emission light from each LED laid on the face of the light entrance side of the integrator lens.

FIGs. 10(a) to 10(d) are schematic views showing the irradiance distribution at the light irradiation surface in the case of an arrangement of the cell lenses and the LEDs as in FIG. 9.

FIGs. 11 (a) to 11(c) are schematic views showing an example for a preferred arrangement of cell lenses and LEDs for the case of cell lenses with three kinds of sizes.

FIGs. 12(a) to 12(c) are schematic views showing an example for a preferred arrangement of cell lenses and LEDs for the case of cell lenses with four kinds of sizes.

FIGs. 13(a) and 13(b) are schematic views showing a second embodiment of the present invention.

FIGs. 14(a) to 14(d) show a comparison example to explain the second embodiment and is a view showing the irradiance distribution if no corner radii are provided.

FIGs. 15(a) to 15(d) are schematic views showing the irradiance distribution at the light irradiation surface for the case that corner radii are provided.

FIGs. 16(a) and 16(b) are schematic views of a light irradiation device made up by arranging LEDs side by side on a substrate.

FIGs. 17(a) and 17(b) are schematic views showing a structural example of a segment light source using an integrator lens.

FIGs. 18(a) and (b) are schematic views showing the irradiance distribution at the light irradiation surface for the case that segment light sources of FIG. 17 are arranged adjacent to each other.

### Detailed Description of the Invention

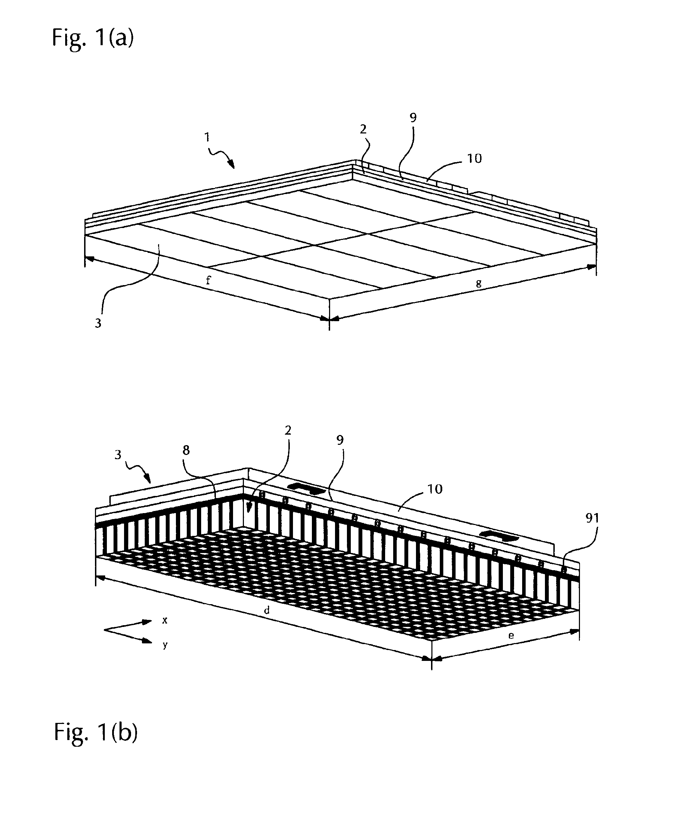

Using FIG. 1 to FIG. 4, a first embodiment of the present invention will be explained. FIG. 1(a) is an oblique view showing the light irradiation device of a first embodiment of the present invention, showing the light irradiation device from below, while FIG. 1(b) is an oblique view showing light source units provided in the light irradiation device of FIG. 1(a).
As shown in FIG. 1(a), this light irradiation device 1 is a device constituted by arranging a plurality of light source units 3 planarly side by side. As to the size of the region to be irradiated, in case of a device for G8 substrates of liquid crystal panel substrates, large screens of approximately 2200 mm × 2500 mm can be formed. This embodiment is made up by arranging 5 × 2 light source units 3, that is, a total of 10 light source units.

As shown in FIG. 1(b), the light source unit 3 is made up by arranging a plurality of segment light sources 2 planarly side by side. The segment light sources 2 are arranged and fixed side by side on a support plate 8 in which lead wires (not shown) enabling an individual power supply are formed. The plurality of segment light sources 2 arranged side by side constitutes an integrated unitized light source unit group 3.
At the support plate 8, a water cooling plate 9 is provided, on the back side of which water cooling holes 91 are formed. Further, on the back side, a power supply unit 10 connected to said lead wires is arranged. The size (d × e) of the light source unit group 3 is, for example, approximately 1130 mm × 510 mm.

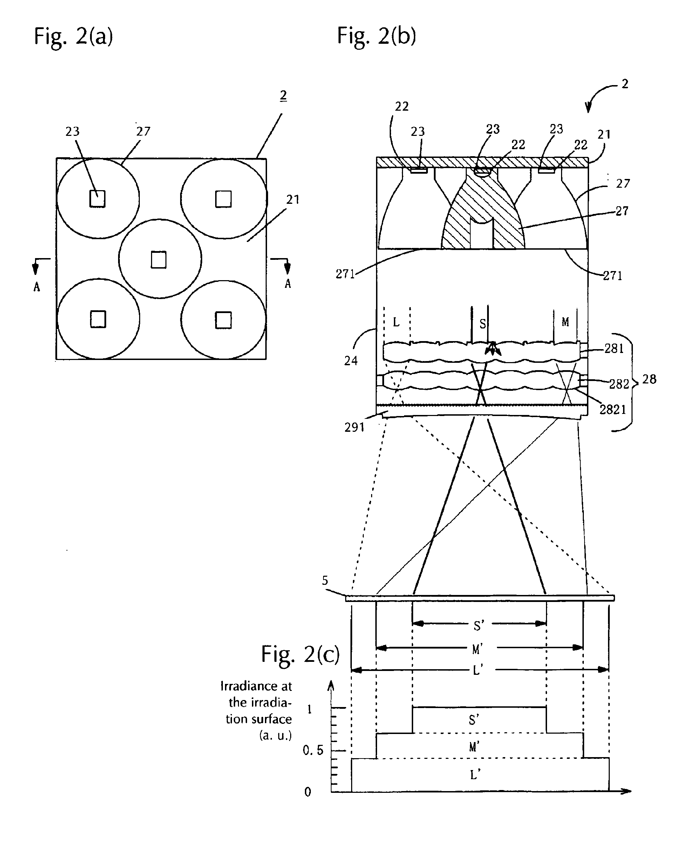

Using FIG. 2, the segment light sources 2 provided in said light source unit 3 will be explained.
FIG. 2(a) is a view in which a segment light source 2 is seen from the light exit face side of a transparent lens body 27. FIG. 2(b) is a sectional view along A-A in FIG. 2(a), and FIG. 2(c) is a view showing the irradiance distribution when light emitted from the segment light source 2 is irradiated onto a workpiece 5 shown in FIG. 2(b). In FIG. 2, objects similar to those shown in FIG. 1 are indicated by the same reference numerals.

As shown in FIG. 2, the segment light source 2 is made up by providing, for example, five LED elements 23 (in the following referred to as LEDs 23) molded in transparent resin 22 on the same substrate 21. In the present embodiment, a light guiding body 24 is formed such that it extends over a defined length vertically to the substrate 21 and in the light radiation direction. The LEDs 23 all emit light with approximately the same wavelength. When used, for example, as exposure light, this 'light' includes far ultraviolet radiation (radiation with a wavelength of approximately 200 to 300 nm) and near ultraviolet radiation (light with a wavelength of approximately 300 to 400 nm). When used for curing resin such as for bonding liquid crystals, known mercury lamps having a main wavelength of 365 nm, 405 nm, 436 nm are used, but the LEDs 23 in the present application also comprise the region from this near infrared region containing these main wavelengths to visible light.

The reason for the provision of a plurality of LEDs 23 with the same wavelength region is that, if one of them should have gone out, this one can be compensated by the light output from the other LEDs 23. That is, by increasing the power supply to the other LEDs 23, which are able to light, their light output can be increased and, as a result, the light output from the LED 23 having gone out can be compensated. The 'same wavelength region' does not mean a complete conformity of the spectral distribution; as long as light can be compensated among the LEDs 23 within one segment light source 23, fluctuations are no problem.
For the light guiding body 24 a hollow tube body for which for example a metal plate has been formed into an angular tube body is used, and the light guiding body is configured such that light emitted from the LEDs 23 does not leak out to the outside. The inner surface may be a reflecting surface or a light absorbing surface.

Each LED 23 molded in the transparent resin 22 is also molded in a transparent lens body 27, and the transparent lens body 27 has the function to radiate the light emitted from the LED 23 as parallel light towards the bottom side of the paper sheet. The light emitted from the transparent lens 27 is mixed, for example, by an integrator lens 28 (281, 282) and is emitted from the light exit surface 2821 of the integrator lens 28 (282) of the light guiding body 24. That is, in this segment light source 2 the transparent lens body 27 and the integrator lens 28 are provided with the function to mix the light from the LEDs 23 and to guide it to the light exit surface 2821. Here, light being radiated in an angle of at most 16 ° with regard to the central light ray of the light emitted from the light source is called parallel light.
The light emitted from the integrator lens 28 is condensed, as shown in FIG. 2, by a condenser lens 291 and laid onto the irradiation surface of the workpiece 5. In the present embodiment, the condenser lens 291 is a Fresnel lens having an axial symmetrical condensing characteristic with an axis vertically to the lens surface as the center, and it is arranged such that the center of the Fresnel lens corresponds to the center of the integrator lens 28.
Here, the size of the substrate 21 on which the LEDs 23 are mounted is approximately 30 mm × 30 mm, and the distance from the substrate 21 to the condenser lens 291 is for example 40 mm. Further, said transparent lens 27 has a diameter of, for example, 11 mm and the height in the direction of the optical axis is 10 mm.

This integrator lens 28 consists of a plurality of cell lenses, and the aperture sizes (sizes of the spherical parts acting as lens) of the cell lenses at the side which opposes the LEDs (at the face on the entrance side of the light) are not the same. It consists of various kinds of lenses with differing diameters. In FIG. 2(b), it is made up of lenses with three kinds of sizes with the diameters S, M and L. When cell lenses with differing sizes S, M and L are formed at the face on the entrance side of the light, there are also three kinds of sizes (surface areas) of light radiating into the spherical face of each cell lens S, M and L. Therefore, the size of the light having entered for example the cell lens S with the smallest size becomes also the lowest irradiation size at the irradiation surface of the workpiece 5. Thus, by means of the kind of the cell size, an irradiation size corresponding to that kind is formed also on the irradiation surface of the workpiece 5, and by means of overlapping, the added-up light quantity assumes a shape as shown in FIG. 2(c).
That is, light from the cell lenses with the three kinds of sizes S, M and L for the aperture size at the light entrance side sums up in the central region of the workpiece 5 and the irradiance is the highest. Surrounding this region, a region is formed in which light from cell lenses with the second largest size M among the aperture sizes and light from cell senses with the third largest size L among the aperture sizes adds up. Then, surrounding the region in which the light from the cell lenses with the aperture sizes M and L adds up, a region is formed which is irradiated with light from cell lenses with the size L. By means of this, an irradiance distribution is formed in which the irradiance of the radiation from the segment light source 2 becomes gradually lower from the center towards the outer edges.
In the following, the region in which light from cell lenses with said aperture size S adds up will be called S', the region in which light from cell lenses with said aperture size M adds up will be called M', and the region in which light from cell lenses with the aperture size L adds up will be called L'.

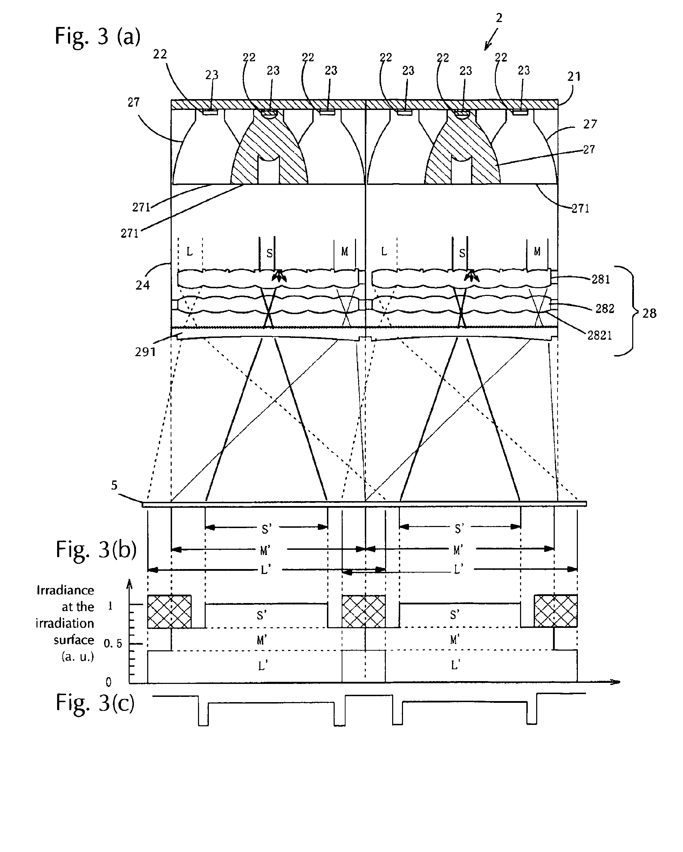

The case in which such segment light sources 2 are arranged adjacent to each other is shown in FIG. 3. FIG. 3(a) is a sectional view of segment light sources 2 similar to FIG. 2(b),
FIG 3(b) is a view showing the irradiance distribution which is formed by emitted light from two segment light sources 2 that overlaps on the workpiece, and FIG. 3(c) is a view showing the shape (the outline) of the irradiance distribution. The configuration of each segment light source is the same as shown in FIG. 2, and objects similar to those shown in FIG. 2 are indicated by the same reference numerals.
If segment light sources 2 shown in FIG. 2 are arranged adjacent to each other, the light of the regions M' and L' from the segment light source 2 on the right side of the paper sheet and the light of the region L' from the segment light source 2 on the left side of the paper sheet are added up at the boundary of the adjacent segment light sources, as is shown in FIG. 3. Similarly, the light of the regions M', L' from the segment light source 2 on the left side of the paper sheet and the light of the region L' from the segment light source 2 on the right side of the paper sheet add up. The region in which two segment light sources overlap is the region with the second and third irradiance in the irradiance distribution of each segment light source 2, that is, a region in which the irradiance is suppressed. By means of the overlap of this light, an irradiance distribution such as shown in FIG. 3(c) can be formed and a peak irradiance distribution such as explained in the 'objects to be solved' can be suppressed.

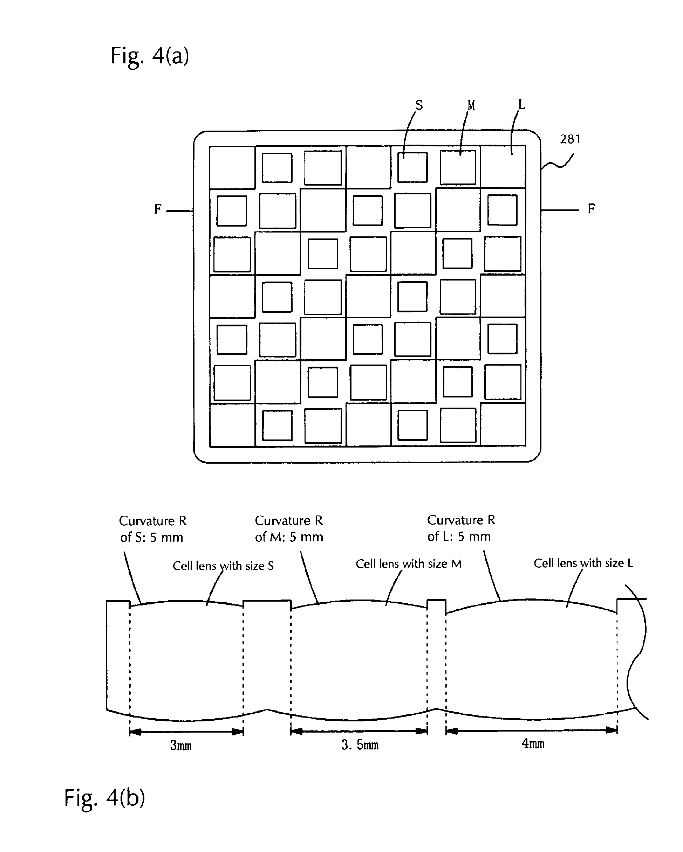

FIG. 4(a) is a view in which the face of the light entrance side of the integrator lens 281 arranged at the side close to the LEDs is seen. Like in FIG. 4(a), the light entrance side of the integrator lens 28 is formed by cell lenses S, M, and L with a plurality of sizes. The size of the cell lens referred to in the present invention is, as mentioned above, the surface area of each cell lens for example in FIG. 4(a).

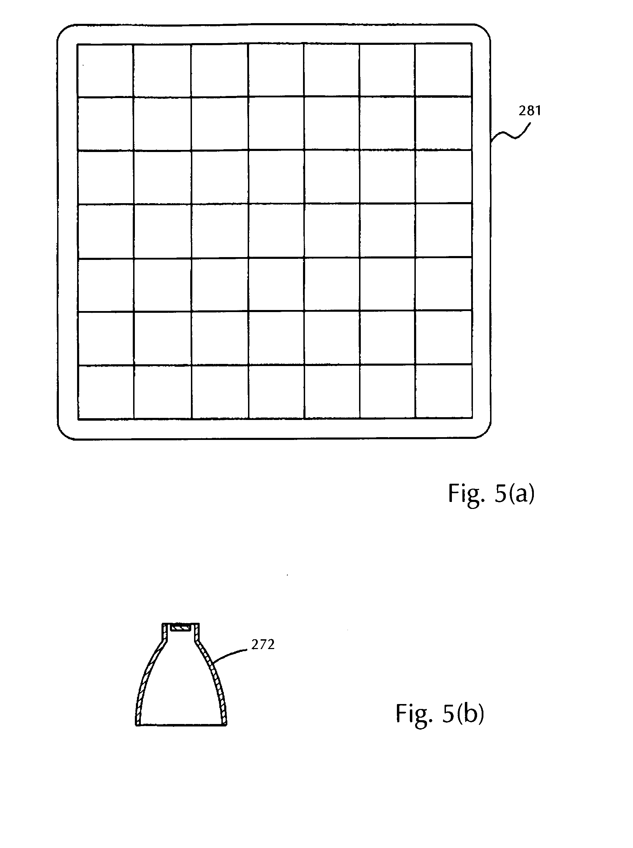

FIG. 4(b) is a sectional view (a partially enlarged view) along F-F in FIG. 4(a). FIG. 5(a) is a view in which the face of the light exit side of the integrator lens 28 is seen.

The face of the light entrance side of the integrator lens 28 is constituted of a plurality of cell lenses with differing aperture sizes, and in the boundary region of each cell lens, which does not function as cell lens (the part which is not a spherical face), a convex part 28a with a planar peak is formed. The surface of the convex part is, for example, configured as a diffusion face, and light irradiating from this part becomes diffusion light. The surface of said convex part may also be a light absorbing face.
The aperture sizes of all cell lenses at the face of the light exit side of the integrator lens 28 are the same, as is shown in FIG. 5(a), and in the boundary region of each cell lens there is no formation of said convex part 28a.
The curvature of the lens surface of each cell lens S, M and L of the integrator lens 28 is, for example, R = 5 mm, as is shown in FIG. 4(b), and the size of the cell lenses S is 3 mm, that of the cell lenses M is 3.5 mm, and that of the cell lenses L is 4 mm.

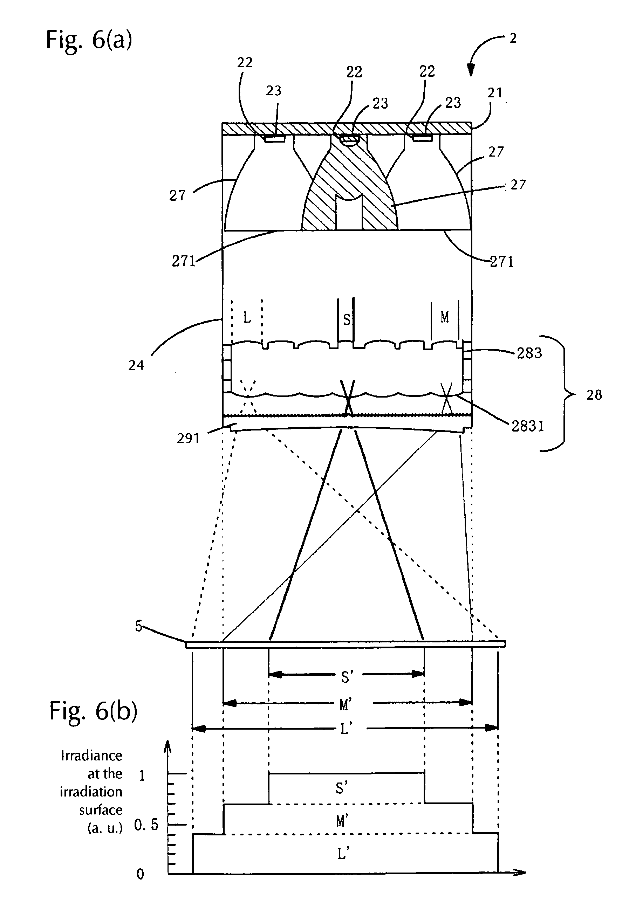

In FIG. 2 etc. a transparent lens 27 is formed at the LED 23 and parallel light is formed, but it is also possible to form parallel light by means of a mirror 272 shown in FIG. 5(b). Then, in FIG. 2 etc., because of the formation of a plurality of cell lenses S, M and L at the entrance side of the integrator lens 28, convex parts 28a have been formed where the regions not being spherical faces of cell lenses protrude, as is shown in FIG. 4(b), but as shown in FIG. 6 discussed later, these may also be designed as concave parts. The reason, why regions not being spherical faces of cell lenses protrude or are designed as concave parts is to arrange the cell lenses of the entrance side of the integrator lens 281 with different surface areas and the cell lenses at the exit side such that they oppose each other one to one in order that their central positions coincide.

FIG. 6(a) and (b) are views showing an example in which the integrator lens 28 is formed by means of one element. The remaining configuration is the same as in FIG. 2, and the same objects are indicated by the same reference numerals. In FIG. 6, the regions not being spherical faces of cell lenses are configured as concave parts, as was mentioned above. In FIG. 2 mentioned above, the integrator lens 28 was formed by means of two elements, but when a long formation in the vertical direction of the paper sheet is possible, it may also be one integrator lens 283, as is shown in FIG. 6.

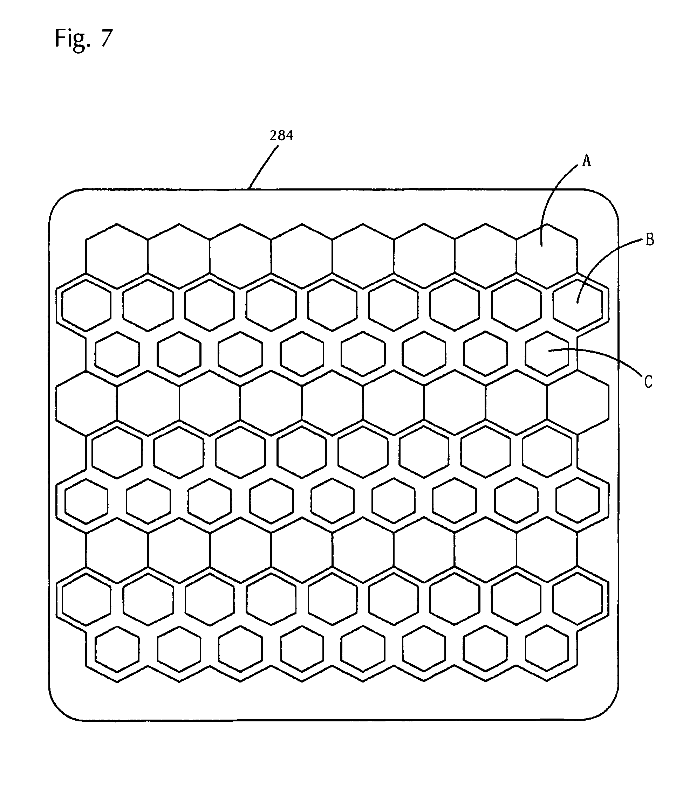

FIG. 7 is a view showing another structural example of an integrator lens. This drawing is a view in which the segment light source 2 is seen from the light exit face side of the transparent lens body 27. As long as a plurality of cell lenses with sizes L, M and S can be formed, their shape may be square as in FIG. 4, but it may also be hexagonal, as is shown in FIG. 7. In FIG. 7, hexagonally shaped cell lenses A, B and C with sizes L, M and S are provided at the light entrance side of an integrator lens 284.

In FIG. 2 to FIG. 7, examples have been explained in which the sizes of the cell lenses at the light entrance side of the integrator lens differ, but instead of designing the sizes of the cell lenses differently it is also possible to provide a mask with differing aperture sizes at the light entrance side of the integrator lens 281, 283.

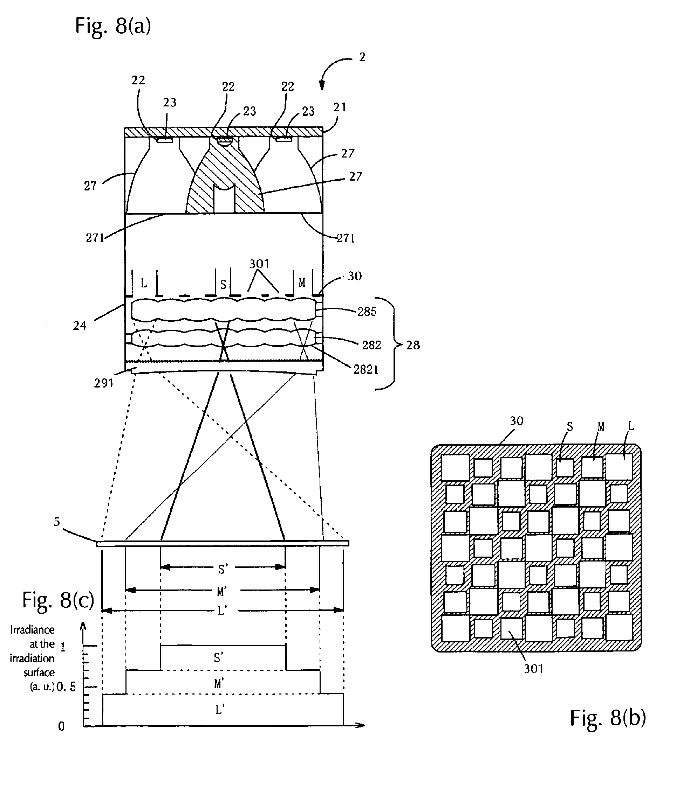

FIG. 8 is a view showing a variation of the above mentioned embodiment in which a mask is provided at the light entrance side of the integrator lens in the segment light source shown in the above mentioned FIG. 2. As shown in FIG. 8(a), a mask 30 is provided at the light entrance side of an integrator lens 285. In this mask 30, apertures 301 with differing sizes are provided at positions corresponding to each cell lens of the integrator lens 281, as is shown in FIG. 8(b). In this case, the sizes of all cell lenses at the light entrance side of the integrator lens 285 are designed in the same way as shown in FIG. 5(a). Also by providing a mask 30 having apertures 301 with differing aperture sizes at the light entrance side of the integrator lens 284, similar to the examples shown in FIGs. 2 to 7 an irradiance distribution is formed in which the irradiance gradually decreases from the center towards the outer edges.
Instead of arranging a mask such as mentioned above it is also possible to provide light shading (light absorbing) regions having the same shape as the mask, as is shown in FIG. 8(b).

By the way, in the present invention the cell lenses with all sizes at the light entrance side of the integrator lens 28 are arranged uniformly and not uneven on the light irradiation face and the LEDs are arranged such that the light from all LEDs radiates uniformly into the cell lenses with all sizes. Thus, in case that one LED should go out, it becomes possible as mentioned above to maintain the irradiance distribution by means of all segment light sources on the surface to be irradiated before and after this going-out by increasing the intensity of the emission light of the other LEDs.
In the following, the arrangement of the cell lenses with all sizes at the integrator lens 28 and the arrangement of the LEDs by means of which the irradiance distribution can be maintained the same before and after the going out of an LED will be explained.

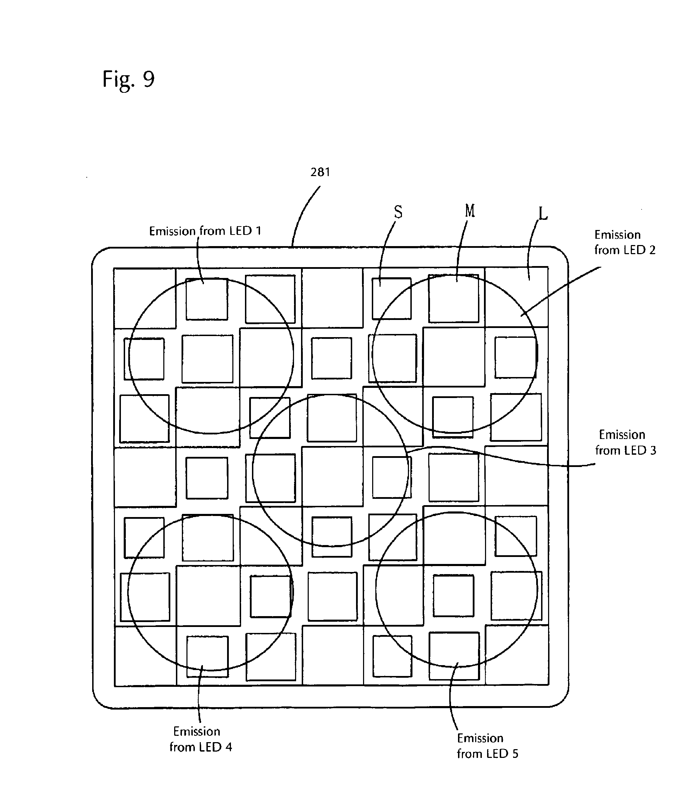

FIG. 9 is a view in which the integrator lens 281 is seen from the light entrance side such as shown in FIG. 4(a), and the arrangement of all cell lenses with all sizes is the same as shown in FIG. 4(a).
In FIG. 9, the emission light (circles in FIG. 9) from all LEDs is laid onto the face of the light entrance side of the integrator lens shown in FIG. 4(a). In the example shown in FIG. 9, the cell lenses with all sizes and the LEDs are arranged such that the surface areas irradiated by the emission light of each LED on the cell lenses with the plurality of sizes become approximately the same. If, for example, there are five LEDs 1 to 5 and the ratio between the surface area of the input by LED1 into the size S and the surface area of the input into the size M and the surface area of the input into the size L is 3 : 3 : 4, also LED2 has this ratio of S : M : L = 3 : 3 : 4 and also the LEDs 3 to 5 are arranged such that the same ratio is obtained. This shows that the light quantity input into all cell lenses with differing sizes is approximately the same for all LEDs.

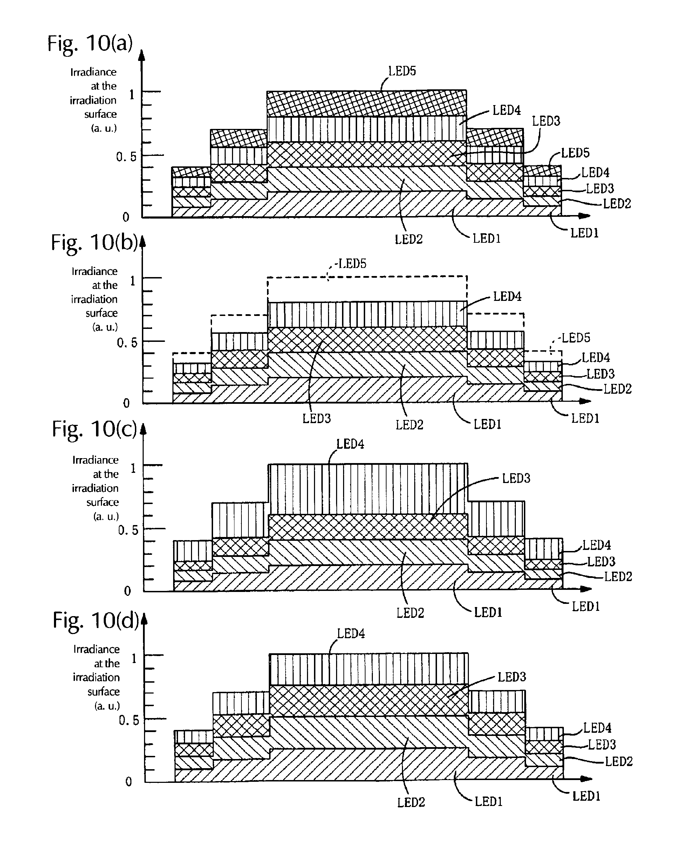

If, in this case, one LED should go out, the irradiance distribution at the surface to be irradiated by each segment light source can be maintained the same before and after the going out by increasing the intensity of the emission light of the other LEDs. This is explained by FIG. 10.
FIG. 10 is a view showing the irradiance distribution at the light irradiation surface when the cell lenses of all sizes and LED1 to LED5 are arranged such as in FIG. 9. Each region shown by hatching indicates a region irradiated by LED1 to LED5 such as shown in the same drawing. FIG. 10(a) shows the case in which all LEDs are lighting, FIG. 10(b) shows a case in which LED5 has gone out (the portion indicated by dotted lines is the decrease because of this going out), FIG. 10(c) shows the case in which the irradiance by means of LED4 is increased and the going out of LED5 is compensated, and FIG. 10(d) shows the case in which the irradiance by means of the LEDs 1 to 4 is increased and the going out of LED5 is compensated. In FIG. 10, the irradiance distribution by the segment light source changes from FIG. 10(a) to FIG. 10(b) when one (LED5) of all the LEDs has become non-lighting. There are no changes between both as to the irradiance distribution in the lateral direction of the paper sheet but as the specified irradiance (in the direction of the vertical axis) cannot be obtained in FIG. 8(b), it must be compensated by the four LEDs being able to light.

Now, the ratio of the light quantity input into the cell lenses by LED5 having become non-lighting is S : M : L = 3 : 3 : 4, and if the ratio of the light quantity input into the cell lenses by the lighting LED4 is the same ratio as that of LED5 with 3 : 3 : 4, it becomes possible to compensate the irradiance of the lost LED5 with LED4 without changing the irradiance distribution of the segment light source, as is shown in FIG. 10(c), when the power supply to LED4 is increased and its light quantity is increased.
If the power supply to the one LED4 is increased, the durability decreases as compared to LED1 to LED3 for which the power supply is not increased, but if the power supply to all LEDs 1 to 4 is increased in an amount of, for example, 25 %, the irradiance distribution becomes as shown in FIG. 10(d), because the light quantity ratios by each LED 1 to 4 to S : M : L are approximately the same as the light quantity ratio by LED5 to S : M : L. That is, the irradiance distribution of this segment light source can be rendered approximately the same as that in which LED5 was lighting (FIG. 10(a)), and therefore the irradiance of LED5 can be compensated by the LEDs 1 to 4.

If the surface areas at which the emission light from all LEDs is input into the cell lenses with a plurality of sizes are different, the following occurs. If, for example, there are five LEDs 1 to 5 and the ratio between the surface area of the input by LED5 into the size S and the surface area of the input into the size M and the surface area of the input into the size L is 3 : 3 : 4, L : M : S becomes 7 : 2 : 1 at LED4. This shows that also the light quantities input in all cell lenses with differing sizes differ according to the above mentioned ratio.
If in this case for example LED5 has become non-lighting and it is attempted to increase the power supply to LED4 and to increase its emission light quantity, even if the light quantity of LED5 is compensated the irradiance distribution at the segment light source changes because of the difference between the ratio at LED5 and the ratio at LED4.

The arrangements of the cell lenses and the LEDs which make it possible to maintain the irradiance distribution the same before and after the going out of an LED will be explained further. To maintain the irradiance distribution at the surface to be irradiated the same before and after the going out of an LED, the following configurations are thought to be preferable.
(1) A plurality respectively of segment lenses of all sizes is irradiated by one LED or at least five or more LEDs are provided.
(2) An arrangement of all kinds of cell lenses is made one set and this one set is arranged regularly.

In the following, the above mentioned point (2) will be explained further.

### Example 1: Three kinds of cell lens sizes

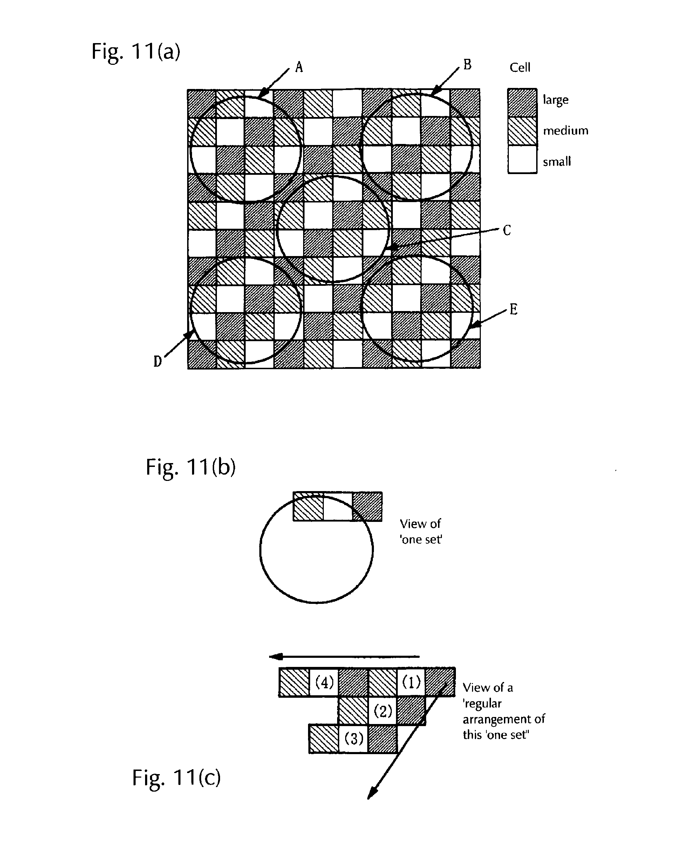

FIG. 11 (a) is a view in which an integrator lens consisting of three kinds of cell lenses - large, medium and small - is seen from the light irradiation side, and the light (the circles in the drawing) from five LEDs A to E is shown laid thereon. Here, the sizes of the cell lenses are shown by differing hatchings. The 'one set' in this example is, as for example shown in FIG. 11(b), a group arranged from the left side in the order 'medium', 'small' and 'large', and the 'regular arrangement of this one set' means, as shown in FIG. 11(c), that 'one sets' are arranged sequentially obliquely and sequentially laterally. By means of this, the light from all LEDs can be irradiated in the same way into the cell lenses of all sizes and it is possible to suppress an irradiation of the light from a certain LED only into, for example, cell lenses having the large size or an inhomogenity of the kinds of cell lenses, into which the light from all LEDs is irradiated. If in case of an inhomogenity of the kinds of cell lenses into which the light from all LEDs is irradiated, such that the light from LED A is irradiated only into large cell lenses while the light from LED B is irradiated only into small cell lenses, LED A has become non-lighting and it is attempted to support the light quantity of LED A by LED B, only the light from small cell lenses is intensified and the irradiance distribution at the surface to be irradiated cannot be maintained the same before and after the going out of the LED. If, on the other hand, 'an arrangement of all kinds of cell lenses is made one set and this one set is arranged regularly', as is shown in FIG. 11(a), the cell lenses into which the light from all LEDs is irradiated contains this 'one set', the light quantity of an LED having gone out is compensated by the light quantities of the other LEDs, and by means of this the irradiance distribution at the surface to be irradiated can be maintained the same before and after the going out of the LED.

### Example 2: Four kinds of cell lenses

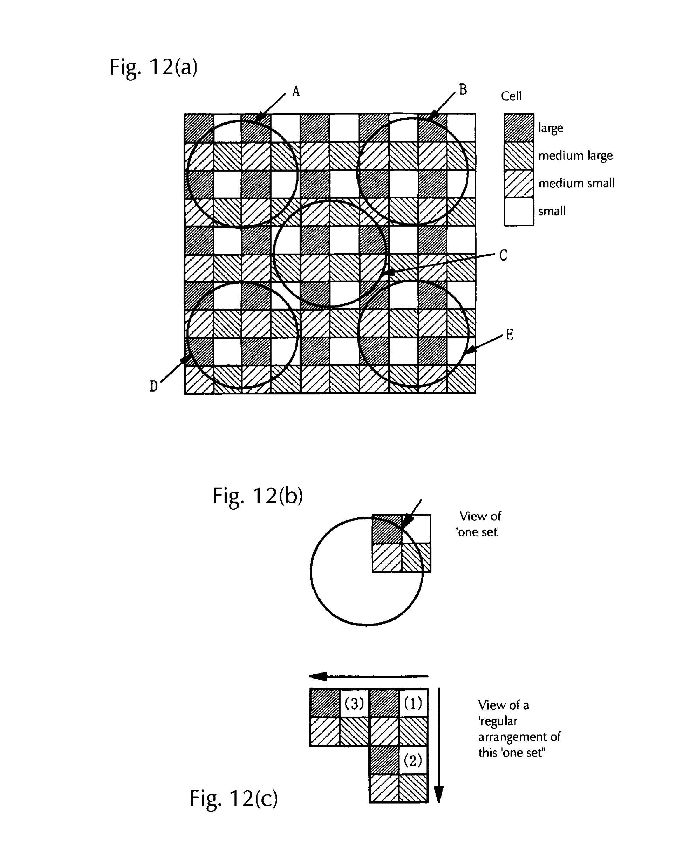

FIG. 12(a) is a view in which an integrator lens consisting of four kinds of cell lenses - large, medium large, medium small and small - is seen from the light irradiation side, and the light (the circles in the drawing) from five LEDs A to E is shown laid thereon. The 'one set' in this example is the group of FIG. 12(b), in which 'large', 'medium large', 'medium small' and 'small' are arranged sequentially, and the 'regular arrangement of this one set' is the sequentially oblique and sequentially lateral arrangement of this 'one set' shown in FIG. 12(c). Also when the kinds of cell lenses are increased in this way, it becomes possible, similar to example 1, in case that one LED should become non-lighting, to maintain the irradiance distribution on the surface to be irradiated the same before and after the going out of the LED by compensating the light quantity of the LED having gone out by the light quantities of the other LEDs. In the above description, the case has been explained in which the integrator lens is constituted from cell lenses with a plurality of sizes, but also if a mask is provided at the light entrance side of the integrator lens, as is shown in the above mentioned FIG. 8, the same results can be achieved by implementing the arrangement of the apertures with a plurality of sizes of the mask as explained above.

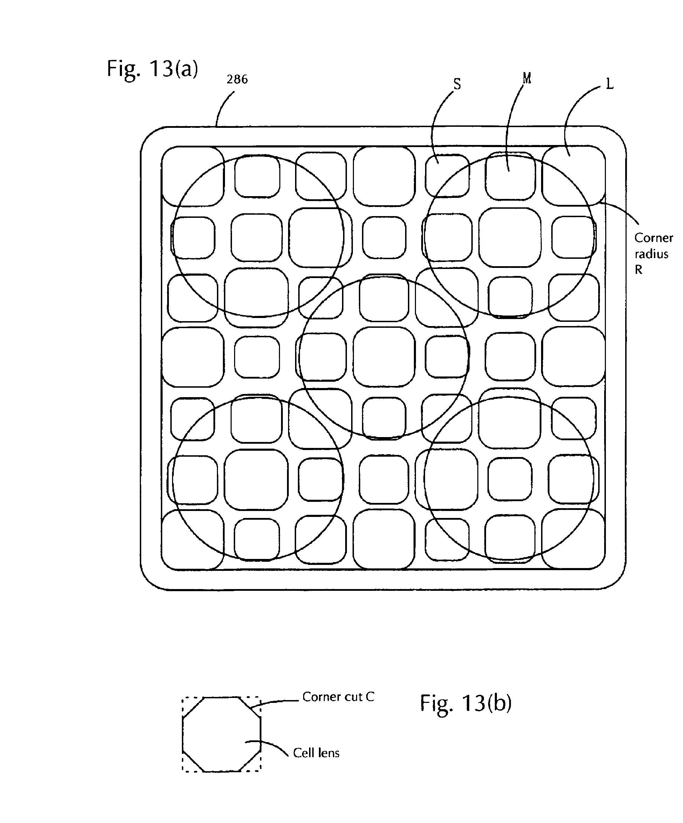

FIG. 13 is a view showing the second embodiment of the present invention. It is a view showing an embodiment in which corner radii are provided at the corner parts of the cell lenses on the side opposing the LEDs. Similar to the above mentioned FIG. 4(a), the integrator lens 286 is seen from the light irradiation side.
In the following, the provision of corner radii or corner cuts at the corner parts of the cell lenses will be explained, but an application is also possible if, as shown in FIG. 8, a mask is provided at the side opposing the LEDs, and in such a case the corner radii or corner cuts are provided at the apertures of the mask.

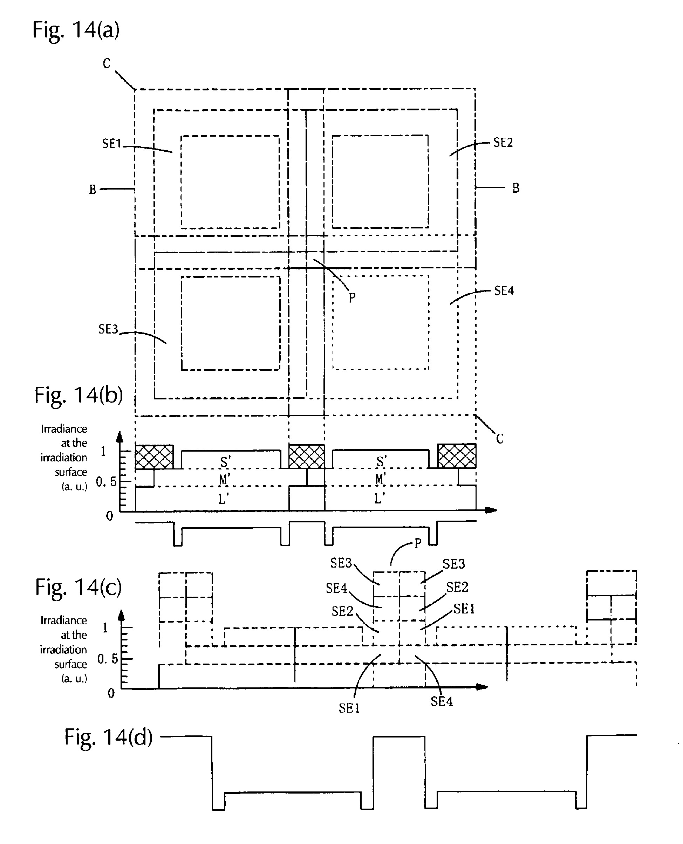

FIG. 14 is a comparison example to explain the second embodiment and shows the irradiance distribution at the surface to be irradiated for the case in which, unlike the present embodiment, no corner radii or corner cuts are provided. By means of FIG. 14, the problems occurring when no corner radii or corner cuts such as in the present embodiment are provided at the corner parts of the cell lenses will be explained.
FIG. 14(a) is a view in which each irradiation distribution from four segment light sources SE1 to SE4 at the irradiation surface of a workpiece is seen from the side of the segment light sources. The broken lines, single dotted lines, double dotted lines and dotted lines in this drawing show the irradiation regions of light emitted from the respective segment light sources SE1 to SE4.
FIG. 14(b) shows the irradiance distribution at the section B-B of FIG. 14(a), and FIG. 14(c) shows the irradiance distribution at the section C-C of FIG. 14(a). FIG. 14(d) shows only the outline of the irradiance distribution of FIG. 14(c).

If a plurality of segment light sources is arranged adjacent to each other, it is necessary to arrange them adjacent to each other not only laterally, as is shown in FIG. 3, but to actually arrange them adjacent to each other in the X-Y direction and to bring the corner parts of four segment light sources into abutment, as is shown in FIG. 1(b). Therefore, as is shown in FIG. 14(a), on the irradiation surface a region (P in this drawing) becomes possible, in which the radiation from the four segment light sources overlaps. Because, as was explained by the first embodiment, the irradiance of a segment light source is set lower at the outer edges than the irradiance in the center, it is possible to suppress light quantity peaks at boundaries in regions, in which the emission light from two segment light sources overlaps. But as shown in FIG. 14(c), the light quantity peak at the boundary in the region, in which the emission light from four segment light sources overlaps, becomes too large and the uniformness of the irradiance distribution may deteriorate. That is, as shown in FIG. 14(c), in the region in which the emission light from four segment light sources overlaps, the light from the segment light sources SE1 to SE4 overlaps and the light quantity in this region is great as shown in FIG. 14(d).

Thus, as shown in FIG. 13, corner radii R are provided at the peak position of each cell lens of the integrator lens 286. By means of this configuration, a peak of the light quantity in the region in which the light from the segment light sources SE1 to SE4 overlaps can be suppressed. If, for example, the sizes of the cell lenses of the integrator lens 286 are such as mentioned above, with size S being 3 mm, size M being 3.5 mm and size L being 4 mm, the corner radii amount to, for example, R = about 0.5 mm.

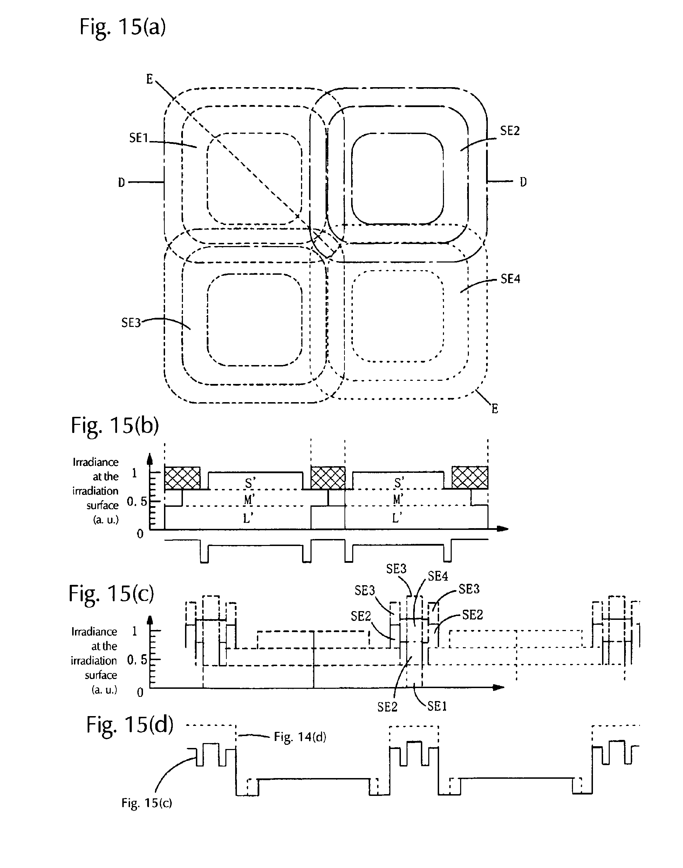

FIG. 15 is a view in which each irradiation distribution from four segment light sources 1 to 4 being configured like in FIG. 13 at the irradiation surface of a workpiece is seen from the side of the segment light sources. The broken lines, single dotted lines, double dotted lines and dotted lines in this drawing show the irradiation regions of light emitted from the respective segment light sources SE1 to SE4.
FIG. 15(b) shows the irradiance distribution at the section D-D of FIG. 15(a), and FIG. 15(c) shows the irradiance distribution at the section E-E of FIG. 15(a). FIG. 15(d) shows only the outline of the irradiance distribution of FIG. 15(c).
Because corner radii R are provided at the peak position of each cell lens as shown in FIG. 13, the corner radii R of the cell lenses are reflected and at the peak position of their irradiance distribution, R is formed, as is shown in FIG 15(a). In the irradiance distribution of FIG. 15(b) being a section D-D of FIG. 15(a) at which no corner radii R are formed, there are no differences to FIG. 14(b). In the irradiance distribution of FIG. 15(c) being a section E-E of FIG. 15(a) at which corner radii R are formed, on the other hand, the overlapping region of the segment light sources SE1 to SE4 becomes small, and therefore the protrusion at the boundary of the segment light sources can be rendered small, as is shown in FIG. 15(d).

In FIG. 15(d), the dotted line parts correspond to the continuous line part of FIG. 14(d) (irradiance distribution when no corner radii are provided). The continuous line part of FIG. 15(d) shows the outline of the irradiance distribution when corner radii are provided. As can be appreciated from a comparison of both, the light quantity protrusion can be suppressed by providing corner radii R such as in the present embodiment and the uniformness of the irradiance distribution can be increased.
In FIG. 13, corner radii R are provided at all cell lenses, but a provision at all cell lenses is not implicitly necessary and it is sufficient to provide them at portions which are significantly enhanced as a result of the overlap of all segment light sources. With regard to the example of FIG. 15, there is no problem if no corner radii R are provided at the segment lenses with the size S where no light from other segment light sources is added up.

Because it is sufficient, as was explained above, if overlaps of light from the four segment light sources such as in the central region of FIG. 15(a) can be suppressed, there is no necessity to have implicitly corner radii R. As overlaps become small when, for example, linear corner cuts C are provided at the square peak positions and these are rendered, e.g. , hexagonal (in FIG. 13(b) octagonal), such a configuration can also be used.

## Claims

1. A light irradiation device, comprised of a plurality of adjacently arranged segment light sources wherein a plurality of LEDs is arranged on a substrate,
wherein said segment light source comprises an integrator lens arranged such as to be irradiated with light of said plurality of LEDs and a condenser lens arranged such as to be irradiated with light transmitted by said integrator lens, said integrator lens consisting of a plurality of cell lenses,
**characterized in that**
the cell lenses have aperture sizes of different dimensions at that side of said integrator lens that opposes said LEDs and/or a mask is provided at that side of said integrator lens which opposes said LEDs, said mask having apertures at positions corresponding to a respective one of said cell lenses, the mask apertures having sizes of different dimensions.

2. The light irradiation device according to claim 1, wherein corner radii and/or corner cuts are provided at the corner parts of the cell lenses at the side which opposes said LEDs.

3. The light irradiation device according to claim 1 or 2, wherein the cell lenses are arranged in groups, each group comprising cell lenses having different aperture sizes.

4. The light irradiation device according to claim 3, wherein the groups of cell lenses are arranged in a regular manner.

5. The light irradiation device according to any one of claims 1 to 4, wherein one of corner radii and corner cuts are provided at the corner parts of the mask apertures at the side which opposes said LEDs.

6. The light irradiation device according to any one of claims 1 to 5, wherein the mask apertures are arranged in groups, each group comprising mask apertures having different aperture sizes.

7. The light irradiation device according to claim 6, wherein the groups of mask apertures are arranged in a regular manner.
